# EUROPEAN PATENT APPLICATION

(11) **EP 4 787 105 A1**
(43) Date of publication of application: **05.08.2026**
(21) Application number: 25154783.2
(22) Date of filing: 29.01.2025
(51) Int. Cl.: G05D 1/244, G05D 1/689, G05D 105/80, G05D 107/70, G05D 109/25, G05D 111/10, B64U 10/13

(54) **DRONE ASSISTED TRANSFORMER INSPECTION**

(71) Applicant: Hitachi Energy Ltd, 8050 Zürich (CH)
(72) Inventor: KUMAR, Lalit, 1217 Meyrin (CH); SOTO, Mauricio, Knightdale, 27545 (US)
(74) Representative: Vossius & Partner Patentanwälte Rechtsanwälte mbB

(57) **Abstract**

Method for inspecting a static induction device, the method comprising:
- flying autonomously an unmanned aerial vehicle to follow a path defined by at least one first marker placed in a horizontal two-dimensional plane, wherein the horizontal two-dimensional plane is parallel to a ground or is the ground and wherein the path of the UAV is displaced in a vertical direction from the horizontal two-dimensional plane
- executing by the UAV, at each of a plurality of two-dimensional positions defined by a set of second markers placed in the horizontal two-dimensional plane, corresponding predefined instructions, the corresponding predefined instructions comprising creating a recording of the static induction device and comprising at least one of: moving to a predefined vertical distance in a direction perpendicular to the horizontal two-dimensional plane or rotating at an angle around an axis of the vertical direction.

## Description

The present disclosure relates to method for inspecting a static induction device, a corresponding computer program and an unmanned aerial vehicle (UAV) implementing the method.

Currently, inspections of static induction devices, like transformers in this example, rely on technicians manually carrying cameras around transformers, and manually checking if they notice any irregularities at the transformer, e.g. defects or the like. This makes the quality inspection process labor-intensive and dependent on the skill level of the technician and the current situation of the technician, e.g., current stress levels, etc. All of this leads to a non-standardized and highly variable quality checks.

From the safety perspective, these technicians sometimes need to climb to high places and uncomfortable positions to reach difficult places to inspect in the transformer and put themselves in potentially dangerous situations which conflict with labor safety. Thus, current methods for inspecting transformers expose workers to unnecessary risk.

The need for automated quality checks and the inherent dangers of manual inspections require an improved solution. Not only does the current approach decrease quality and endanger personnel, but they can also be time consuming and provide limited data for comprehensive analysis. A more efficient and safer method is crucial to ensure continued quality checks of the transformers. Ensuring quality is a top priority, as well as labor safety.

Developing a new inspection technique can maximize quality checks and improve data collection for analysis while minimizing risk to personnel. This will lead to more informed maintenance decisions, increase in quality, increased customer satisfaction, and ultimately, increased efficiency and safety across the entire system.

The above-mentioned disadvantages are at least partly overcome and/or advantages mentioned herein are at least partly achieved with the features of the independent claims. Dependent claims define preferred embodiments of the present disclosure.

The present disclosure relates to a method for inspecting a static induction device, the method comprising: flying autonomously, by an unmanned aerial vehicle, UAV, following a path defined by at least one first marker placed in a horizontal two-dimensional plane, wherein the horizontal two-dimensional plane is parallel to a ground or is the ground and wherein the path of the UAV is displaced in a vertical direction from the horizontal two-dimensional plane; and executing by the UAV, at each of a plurality of two-dimensional positions defined by a set of second markers placed in the horizontal two-dimensional plane, corresponding predefined instructions, the corresponding predefined instructions comprising creating a recording of the static induction device and comprising at least one of: moving to a predefined vertical distance in a direction perpendicular to the horizontal two-dimensional plane or rotating at an angle around an axis of the vertical direction.

The present disclosure relates to a method for inspecting a static induction device, the method comprising: flying autonomously, by an unmanned aerial vehicle, UAV, following a path defined by at least one first marker placed in a horizontal two-dimensional plane, wherein the horizontal two-dimensional plane is parallel to a ground or is the ground and wherein the path of the UAV is displaced in a vertical direction from the horizontal two-dimensional plane; and executing by the UAV, at each of a plurality of two-dimensional positions defined by a set of second markers placed in the horizontal two-dimensional plane, corresponding predefined instructions, the corresponding predefined instructions comprising creating a recording of the static induction device. The at least one of the corresponding predefined instruction may further comprise at least one of: moving to a predefined vertical distance in a direction perpendicular to the horizontal two-dimensional plane, creating a recording of the static induction device, rotating at an angle around an axis of the vertical direction, changing a zoom or performing a pitch and/or yaw motion of a recording device of the UAV.

The static induction device may be placed on the horizontal two-dimensional plane and/or ground. The UAV may fly above the at least one first marker or may fly roughly above the at least one first marker following at path defined by the at least one first marker. The UAV flies and hence may be displaced in the vertical direction above the horizontal two-dimensional plane or at least above the ground. The path defined by the at least one first marker may lead the UAV to each of the plurality of two-dimensional positions defined by the set of second markers placed in the horizontal two-dimensional plane. The UAV may fly to positions corresponding to the corresponding two-dimensional position and the UAV flying at a position of a third dimension, preferably height or vertical distance to the horizontal two-dimension plane. The third dimension may be perpendicular to the two dimensions of the two-dimensional position.

Technological advancements have opened the door to a new and innovative solution - UAV inspections. UAVs can be equipped with high-resolution cameras (and/or one or more other recording devices) specifically designed to capture detailed images and videos of the static induction device or other recording device(s) for creating recordings of the static induction device. This allows for a thorough inspection without putting humans at risk. Technicians can monitor the inspection performed by the drone from a safe distance, eliminating the need to have a human take the recordings of the equipment.

Beyond the safety benefits, UAV inspections offer several advantages over traditional methods. UAVs can navigate into tight spaces and capture high-definition footage from angles that may be difficult or impossible to reach with a handheld camera. This comprehensive data allows for a more detailed and accurate inspection, potentially revealing hidden defects or potential issues of the static induction device.

Various embodiments may preferably implement the following features.

Preferably, at least one of the corresponding predefined instructions further comprises at least one of: changing a zoom or performing a pitch and/or yaw motion.

This may improve the recordings in that they represent points of interest better. The moving to a predefined vertical distance in a direction perpendicular to the horizontal two-dimensional plane may be directly over the corresponding second marker.

Each of the rotating at an angle around an axis of the vertical direction, changing a zoom or performing a pitch and/or yaw motion may be done by the whole UAV or by a recording device of the UAV while the UAV may remain at a constant position and angle.

Preferably, the at least one first marker is a guidance line or a guidance area defined by two lines, wherein the lines are particularly solid lines, dotted lines or dash-dotted lines.

The guidance line(s) may be positioned on the ground. The (single) guidance line may define two (horizontal) dimensions of the path which the UAV follows. Hence, the UAV may fly above the guidance line. The UAV may fly with a predefined offset or a deviation around to the guidance line(s). The guidance line(s) may be comprised of several guidance lines being gaplessly connected to each other. The guidance line(s) may only define the two horizontal dimensions of the path. Accordingly, the UAV may have a position in a third dimension, preferably height, not defined by the guidance line(s). The guidance line may be a red line.

Preferably, the set of second markers is a plurality of two-dimensional matrix barcodes, in particular quick response, QR, codes.

The set of second markers may be placed on or directly beside or close to the at least one first marker. The set of second markers may provide information to the UAV either (i) that it is a (two-dimensional) position where predefined instruction are to be executed or (ii) that it is a (two-dimension) position with a unique ID. According to the unique ID, the UAV may know or receive information on which predefined instructions are to be executed. Or (iii) the each corresponding one of the set of second markers provides explicit predefined instructions. A mix is possible: Different second markers of the set of second markers corresponding to different options of explained options (i) to (iii). Other options are possible.

The set of second markers may be not placed on the static induction device. There may be further second markers, additional to the set of second markers. The UAV may not execute predefined instructions at the further second markers. It may depend on the make and model of the static induction device, at which second markers the UAV executes predefined instructions and at which second markers the UAV does not execute predefined instructions.

Preferably, the recordings comprise at least one of: still pictures, video recordings, sound recordings and temperature recordings.

The UAV may comprise one or more according recording devices, like a camera, a microphone, an infra-red (IR) camera, and so on. The recordings made may be all of the same type, for example: all recordings may be still pictures. Alternatively, the recordings may be mixed in type.

Preferably, the UAV is a multicopter, and wherein the UAV comprises a recording device being at least one of: a camera, a microphone and an infra-red camera.

The multicopter may be quadcopter or a multicopter with another number of copter units (/rotational blade units), like six or eight. A multicopter may provide better stability of recordings because the multicopter can stand still in the air. Also, a multicopter may fly into angles of the static induction device which show better detail.

Preferably, the corresponding predefined instructions are predefined before flight of the UAV.

The predefined instructions may be saved on a memory unit of the UAV or may be sent to the UAV during the flight. When the predefined instructions are sent to the UAV during flight, they predefined instructions corresponding to a specific second marker may be sent to the UAV upon request by the UAV. The UAV may request these corresponding predefined instructions upon recognizing a specific second marker. Sending the request and/or sending the predefined instructions may happen via Wi-Fi connection, preferably only via Wi-Fi. Preferably, the sending happens without use of GPS and/or Bluetooth. The Wi-Fi connection may be only to an internal network.

Preferably, the method further comprises: processing the recordings by a processing unit to create processed information, wherein particularly the processing unit is not part of the UAV; and checking, by the processing unit, the processed information for abnormalities in the static induction device. Preferably, the UAV records a trajectory of the UAV, in particular including its height at a given second marker.

The recordings made at the second markers may be sent to the processing unit, preferably via Wi-Fi. This may happen during the flight or after the flight has ended. Alternatively, the recordings may be transmitted to the processing unit via a cable after the flight has ended. Preferably, when the recordings are created, they are saved to an internal memory of the UAV.

In an alternative, the processing unit is part of the UAV and the UAV may provide the processed information.

When the processing unit checks the processed information for abnormalities in the static induction device, it may detect faults and/or problems in the static induction device. These faults and/or problems may be due to wrong production, and/or use and wear of the static induction device. The creating of the processed information and the checking for abnormalities may be done with artificial intelligence (AI) and/or machine learning (ML), like image recognition. The creating of the processed information and the checking for abnormalities may be done by comparing the recordings and/or processed information with comparison recordings of a comparison static induction device which has no abnormalities, faults and the like. The comparison recordings may be used to train (/have trained) the Al and/or ML.

The processing unit may be a central processing unit (CPU), a graphic processing unit (GPU), or another processing unit. The processing unit may be part of a computer, server and/or the like. This computer (server and/or the like) may also comprise a Wi-Fi antenna to communicate with the UAV. This computer may also provide the predefined instructions to the UAV.

This process may increase the quality of the static induction device product. Abnormalities may be more reliably found and fixed. Further, the checking process needs less man hours and hence may be cheaper.

Preferably, the method further comprises: maintaining the static induction device based on the processed information.

When an abnormality has be found when checking for it, this abnormality may be maintained, corrected, repaired, and/or the like. The abnormality may be displayed to an engineer and/or operator who may then maintain the static induction device based on that abnormality. Alternatively, information on the abnormality may be sent to the production line or other production robots which then maintain the static induction device based on that information.

This may increase quality of the statice induction device produce. Abnormalities may be corrected. All static induction device products of the same model may be similar, which also reduces faults.

Preferably, the method further comprises: receiving information on a model or type of the static induction device before flight of the UAV and using corresponding predefined instruction according to the model or type, respectively.

Static induction devices of different models and/or types may be inspected. These different models and/or types may need to be inspected from different angles, positions, positions of different second markers, etc. Hence, the predefined instructions may differ for different models and/or types. The processing unit may receive information on which model and/or type of static induction device is to be inspected. The processing unit may then provide the UAV with different predefined instructions depending on model and/or type of the static induction device to be inspected. This may include that (partially) different second markers are used to execute (different) predefined instructions, and/or that different predefined instructions may be executed at a (same) second marker.

This gives a wider scope of use. Different models and/or type of static induction devices may be inspected with the same setup of the UAV, and preferably processing unit.

Preferably, the method further comprises: placing the at least one first marker and the set of second markers relative to the static induction device.

This may happen before the inspection (and the flight) starts. In an alternative, the first and second markers are fixed, preferably on the ground, and the static induction device is moved and placed relative to the first and second markers. When the first and second markers are fixed and the static induction device is moved, the whole place may be dedicated for the inspections. The region of inspection may be surrounded by a net or cage (safety features). This net or cage may prevent the UAV from accidentally exiting the region of inspection. Further, the processing unit may be position near the region of inspection. In the other case of the first and second markers being placed relative the static induction device (the static induction device may remain on its place while the first and second markers are positioned relative to the static induction device), the static induction device does not need to be moved. This is especially advantageous with big and heavy static induction devices like transformers.

Preferably, the static induction device is a transformer or a converter station. The static induction device may also be a power transformer, circuit breakers, disconnectors, or at least one bushing.

The present disclosure also relates to a computer program comprising instructions which, when the computer program is executed by a computer, cause the computer to carry out the method as described above.

The present disclosure also relates to an unmanned aerial vehicle (UAV) configured to implement the method as described above.

The present disclosure also relates to a system comprising the UAV as described, the static induction device, the at least one first marker and the set of second markers. The system may further comprise the net or cage. The system may also comprise the processing unit.

The present disclosure also relates to a method for inspecting a static induction device, the method comprising: flying autonomously, by an unmanned aerial vehicle (UAV) displaced in a third direction relative to a guidance line (first marker) on a surface (horizontal two-dimensional plane) extending in a first direction and a second direction, wherein the first direction, the second direction and the third direction are all perpendicular to each other; while flying displaced in the third direction relative to the guidance line, flying to a plurality of positions in a three-dimensional space in a predefined order according to predefined instructions, wherein each of the plurality of positions is defined by a corresponding displacement in the third direction relative to a marker (second marker) of a plurality of markers (set of second markers), wherein each marker of the plurality of markers is positioned on the guidance line; wherein at least two of the positions are defined relative to a same marker of the plurality of markers and have different displacements in the third direction; and wherein at least two of the positions are defined corresponding to different markers of the plurality of markers; and at each position, creating, by the UAV, a recording with a predefined parameter specific to the position according to the predefined instructions, wherein the recordings are of the static induction device.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows a flowchart of the disclosed method in context.
Fig. 2 shows a system with an UAV with the flight path around a transformer.
Fig. 3 shows a flowchart of the method.

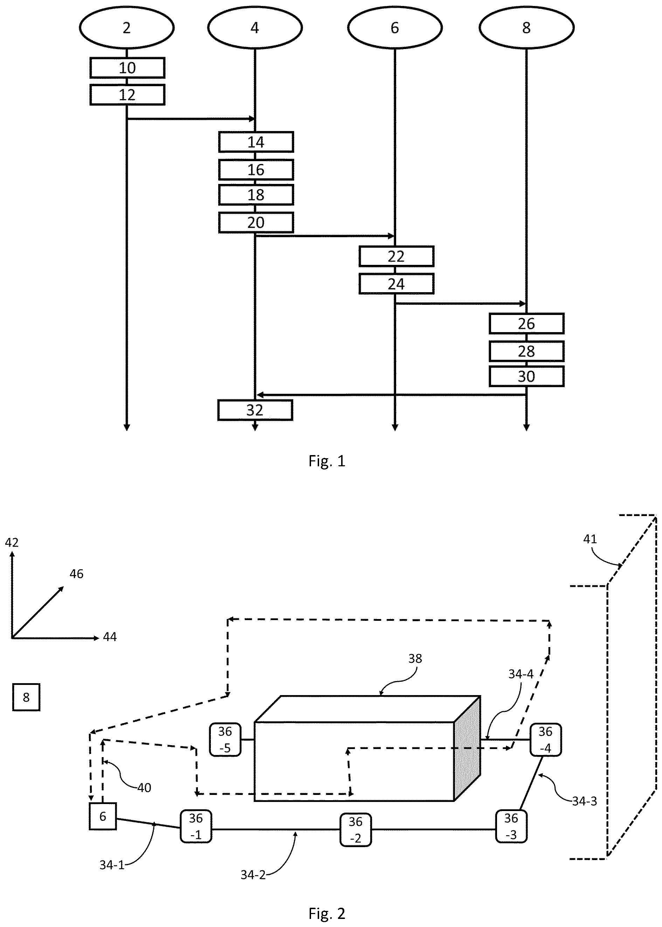

Fig. 1 shows a flowchart of the disclosed method in context. The stations (ovals) are a transformer designer 2 (transformer representative for (any) static induction device), an operator 4, an UAV 6 and a processing unit 8 (PU 8). The transformer designer 2 may be the mechanical designer of the transformer 38 to be inspected, the operator 4 may be the operator in the factory, the UAV 6 may be the UAV used for inspection, and processing unit 8 may be the system that performs the processing and analysis of the recordings (video, ...).

The method has several steps. At step 10, the transformer designer 2 designs the mechanical aspects of the transformer. At step 12, the transformer designer 2 defines the points of interest in the transformer that require especial attention for inspection. These points of interests may be the points which are recorded in the inspection method. When defining the points of interest, the transformer designer 2 may already define the some or all of the corresponding predefined instructions for each point of interest.

This information may then be passed to the operator 4 (arrow between steps 12 and 14). In step 14, the operator 14 defines the path (may be a two-dimensional path defined by first markers) and/or the flight path (may be three-dimensional flight path) of the UAV 6. This may happen after the transformer is manufactured and/or finalized. In step 16, the operator 14 prepares the physical space for navigation (this may include setting up points of reference for the UAV 6, connecting the UAV 6 to the system's network (for example to the PU 8), etc.). In step 18, the operator 6 ensures that safety features 41 are in place which may include setting up the net, cage or cloth mesh, making sure there are no humans within the mesh, making sure the transformer is within the confined spaces designated for inspections (region of inspection), etc. In step 20, the operator 6 green lights, i.e., authorizes or enables (start/stop), the start and end of the inspection performed by the UAV 6.

In step 22, the UAV 6 flies autonomously following a path defined by at least one first marker 34 placed in a horizontal two-dimensional plane, wherein the horizontal two-dimensional plane is parallel to a ground or is the ground and wherein the path of the UAV 6 is displaced in a vertical direction from the horizontal two-dimensional plane. In step 24, the UAV 6 executes at each of a plurality of two-dimensional positions defined by a set of second markers 36 placed in the horizontal two-dimensional plane, corresponding predefined instructions, the corresponding predefined instructions comprising creating a recording of the static induction device and comprising at least one of: moving to a predefined vertical distance in a direction perpendicular to the horizontal two-dimensional plane or rotating at an angle around an axis of the vertical direction, and further optionally at least one of: changing a zoom or performing a pitch and/or yaw motion.

These steps 22 and 24 may include that the UAV 6 follows the flight path 40 designed by the operator 4 and captures video (and/or other recordings) into its internal memory to be later transmitted to the processing unit 8.

At step 26, the PU 8 processes the recordings to create processed information. This may comprise the PU 8 performing any video processing necessary. At steps 28 and 30, the PU 8 checks the processed information for abnormalities in the static induction device. This may comprise (as step 28 part) that the PU 8 uses the processed video to perform Al image recognition of the different parts of the transformer, especially the points of interest. This may further comprise (as step 30 part) that the PU 8 analyzes the recognized images to flag potential defects in the transformer. This information is then passed (arrow between steps 30 and 32) to the operator 4 who, in step 32, then takes actions based on the analysis, such as inspecting further any flagged point of interest, performing further tests, etc.

Fig. 2 shows a system with an UAV 6 with a flight path 40 around a transformer 38. Instead of the transformer 38, any other static induction device could be inspected. The system further comprises the at least one first marker 34 (with different sections 34-1, 34-2 and so on), the set of second markers 36 (with each second marker having another appendix 36-1, 36-2 and so on), a PU 8, and safety features 41. Second markers 36 are placed on the first marker 34.

Fig. 2 further shows directions 42 to 46. Directions 44 and 46 are horizontal directions in which the horizontal two-dimensional plane and the ground extend. Direction 42 is a vertical direction (height). Directions 42, 44, and 46 are also referred to as the x-y-z-coordinate system. In other words, the vectors associated with the directions 42, 44, and 46 span the 3-D space.

The transformer 38 is placed in the middle of the first marker 34 and the second marker 36. The orientation and/or relative distances to the second markers 36 may be important. Around the first marker 34 and second marker 36 there may be a safety feature 41 which may include setting up a net, cage or cloth mesh or may be one of the aforementioned. The safety feature 41 may fully surround the region of inspection. In this fig. only one side is shown for better overview. A mesh may take the form of a standing mesh, or hanging from the ceiling, or fully covered. The system further shows the PU 8 which may be positioned outside the safety feature 41.

The UAV 6 is shown at a starting/ending position. The dashed line shows the flight path 40 of the UAV 6. It can be seen that the flight path 40 follows the first marker 34 in the horizontal directions 44 and 46. The third coordinate (in vertical direction 42) of the flight path 40 is independent of the first marker 34. When starting the flight, the UAV 6 first flights in the vertical direction 42. Then, the UAV 6 follows the first section of the first marker 34-1 until it encounters the first instance of the second marker 36-1. At the first instance of the second marker 36-1, the UAV 6 executes the corresponding predefined instructions. In this first instance of the second marker 36-1, this means lowering the height (change in vertical direction 42) and making a recording of the transformer 38. Further instructions are possible as described in this disclosure. After executing the corresponding instruction at the first instance of the second marker 36-1, the UAV 6 follows the second section of the first marker 34-2 until it encounters the second instance of the second marker 36-2. At the second instance of the second marker 36-2, the UAV 6 executes the corresponding predefined instructions for the second instance of the second marker 36-2. Here, this means increasing the height and making a recording. Further instructions are possible as described in this disclosure. After executing the corresponding instruction at the second instance of the second marker 36-2, the UAV 6 follows the third section of the first marker 34-3 until it encounters the third instance of the second marker 36-3. In this example, there are no predefined instructions for the third instance of the second marker 36-3. This may mean that the third instance of the second marker is not comprised by the set of second markers 36. Therefore, the UAV 6 follows the third section of the first marker 34-3 until it encounters the fourth instance of the second marker 36-4. At the fourth instance of the second marker 36-4, the UAV 6 executes the corresponding predefined instructions for the fourth instance of the second marker 36-4. Here, this means increasing the height and making a recording. Further instructions are possible as described in this disclosure. After executing the corresponding instruction at the fourth instance of the second marker 36-4, the UAV 6 follows the fourth section of the first marker 34-4 until it encounters the fifth instance of the second marker 36-5. At the fifth instance of the second marker 36-5, the UAV 6 executes the corresponding predefined instructions for the fifth instance of the second marker 36-5. Here, this means decreasing the height and making a recording. Further instructions are possible as described in this disclosure. After executing the corresponding instruction at the fifth instance of the second marker 36-5, the UAV 6 returns to the starting/ending position. Here, the UAV 6 returns to the starting/ending position by itself, for example by remembering the position and/or GPS coordinates. In an alternative, the first marker 34 may comprise a further section leading from the last second marker 36 (here 36-5) to the starting/ending position. In some embodiments, the starting position is different to the ending position.

It is possible, that the UAV already has the right height when arriving at a second marker 36. Then, the UAV may only make a recording without changing the height.

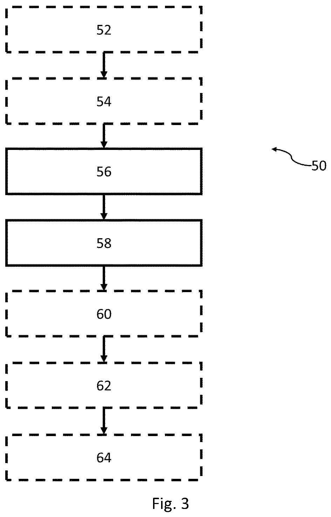

Fig. 3 shows a flowchart of the method. The method 50 comprises several steps. In optional step 52, the at least one first marker and the set of second markers are placed relative to the static induction device. This may alternatively be vice versa. In optional step 54, information on a model or type of the static induction device is received before flight of the UAV and using corresponding predefined instruction according to the model or type, respectively. In step 56, the UAV 6 flies autonomously following a path defined by at least one first marker 34 placed in a horizontal two-dimensional plane, wherein the horizontal two-dimensional plane is parallel to a ground or is the ground and wherein the path of the UAV 6 is displaced in a vertical direction 42 from the horizontal two-dimensional plane. Step 56 may correspond to step 22.

In step 58, the UAV executes, at each of a plurality of two-dimensional positions defined by a set of second markers 36 placed in the horizontal two-dimensional plane, corresponding predefined instructions, the corresponding predefined instructions comprising creating a recording of the static induction device and moving to a predefined vertical distance in a direction perpendicular to the horizontal two-dimensional plane and/or rotating at an angle around an axis of the vertical direction. Step 58 may correspond to step 24. In optional step 60, the recordings are processed by a processing unit to create processed information, wherein particularly the processing unit is not part of the UAV. Step 60 may correspond to step 26 and/or step 28. In optional step 62, the processing unit checks the processed information for abnormalities in the static induction device. Step 62 may correspond to step 28 and/or step 30. In optional step 64, the static induction device is maintained based on the processed information. Step 64 may correspond to step 32.

The adoption of UAV inspections for transformers (and other static induction devices) signifies a significant step forward. By prioritizing quality and safety while leveraging innovative technology, a more efficient and risk-free inspection process can be ensured, ultimately leading to the production of reliable and high-quality transformers.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements.

Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for inspecting a static induction device, the method comprising:
flying autonomously, by an unmanned aerial vehicle, UAV, following a path defined by at least one first marker placed in a horizontal two-dimensional plane, wherein the horizontal two-dimensional plane is parallel to a ground or is the ground and wherein the path of the UAV is displaced in a vertical direction from the horizontal two-dimensional plane; and
executing by the UAV, at each of a plurality of two-dimensional positions defined by a set of second markers placed in the horizontal two-dimensional plane, corresponding predefined instructions, the corresponding predefined instructions comprising creating a recording of the static induction device and comprising at least one of: moving to a predefined vertical distance in a direction perpendicular to the horizontal two-dimensional plane or rotating at an angle around an axis of the vertical direction.

2. Method according to claim 1, wherein the corresponding predefined instruction further comprises at least one of: changing a zoom or performing a pitch and/or yaw motion.

3. Method according to claim 1 or 2, wherein the at least one first marker is a guidance line or a guidance area defined by two lines, wherein the lines are particularly solid lines, dotted lines or dash-dotted lines.

4. Method according to any one of claims 1 to 3, wherein the set of second markers is a plurality of two-dimensional matrix barcodes, in particular quick response, QR, codes.

5. Method according to any one of claims 1 to 4, wherein the recordings comprise at least one of: still pictures, video recordings, sound recordings and temperature recordings.

6. Method according to any one of claims 1 to 5, wherein the UAV is a multicopter, and wherein the UAV comprises a recording device being at least one of: a camera, a microphone and an infra-red camera.

7. Method according to any one of claims 1 to 6, wherein the corresponding predefined instructions are predefined before flight of the UAV.

8. Method according to any one of claims 1 to 7, the method further comprising:
processing the recordings by a processing unit to create processed information, wherein particularly the processing unit is not part of the UAV; and
checking, by the processing unit, the processed information for abnormalities in the static induction device.

9. Method according to claim 8, the method further comprising:
maintaining the static induction device based on the processed information.

10. Method according to any one of claims 1 to 9, the method further comprising:
receiving information on a model or type of the static induction device before flight of the UAV and using corresponding predefined instruction according to the model or type, respectively.

11. Method according to any one of claims 1 to 10, the method further comprising:
placing the at least one first marker and the set of second markers relative to the static induction device.

12. Method according to any one of claims 1 to 11, wherein the static induction device is a transformer or a converter station.

13. A computer program comprising instructions which, when the computer program is executed by unmanned aerial vehicle, UAV, cause the UAV to carry out the method of any one of claims 1 to 10 or claim 12.

14. An unmanned aerial vehicle, UAV configured to implement the method according to any one of claims 1 to 10 or claim 12.

15. System comprising the UAV of claim 14, the static induction device, the at least one first marker and the set of second markers.
